# EUROPÄISCHE PATENTSCHRIFT

(11) **EP 0 625 108 B1**
(45) Veröffentlichungstag und Bekanntmachung des Hinweises auf die Patenterteilung: **15.05.1996**
(21) Anmeldenummer: 93903933.5
(22) Anmeldetag: 09.02.1993
(51) Int. Cl.: B60T 13/569, B60T 11/18

(54) **KOLBEN MIT ÜBER EIN HALTEGLIED EINRASTBARER KOLBENSTANGE**
PISTON WITH ROD SNAPPED IN BY MEANS OF A HOLDING ELEMENT
PISTON A TIGE ENCLIQUETABLE A L'AIDE D'UN ELEMENT DE RETENUE

(30) Priorität: 14.02.1992 DE 4204418; 30.09.1992 DE 4232807
(43) Veröffentlichungstag der Anmeldung: 23.11.1994
(73) Patentinhaber: ITT Automotive Europe GmbH, D-60488 Frankfurt am Main (DE)
(72) Erfinder: BERGELIN, Klaus, D-6272 Niedernhausen (DE); HARTMANN, Willi, D-6086 Riedstadt 2 (DE); SAALBACH, Kurt, D-6082 Mörfelden-Walldorf (DE); LÖW, Peter, D-6394 Grävenwiesbach 1 (DE)
(74) Vertreter: Portwich, Peter
(86) Internationale Anmeldenummer: EP9300306
(87) Internationale Veröffentlichungsnummer: WO9315942

(56) Entgegenhaltungen:
- EP-A- 0 295 395
- WO-A-88/08801
- WO-A-92/08633
- DE-A- 3 323 323
- GB-A- 2 161 232
- GB-A- 2 235 961

## Beschreibung

Die Erfindung betrifft einen Kolben, der sich aus dem Oberbegriff des Hauptanspruchs ergebenden Gattung.

Druckstangen von Kolben werden regelmäßig durch die Betätigungskraft der Bedienungsperson in den Zylinder eingeschoben und durch entsprechend angeordnete Rückholfedern in ihre Ausgangslage zurückgeholt. Dabei sind zwei Rückholfedern vorgesehen, von denen die eine innerhalb des Kolbens angeordnet ist und direkt auf den Kolben wirkt, während die andere außerhalb des Kolbens befestigt ist und das Pedal in seine Ausgangsstellung zurückholt.

Insbesondere bei Geberzylindern kann es passieren, daß die äußere Feder die Kolbenstange aus dem Kolben herauszieht. Zur Sicherung der Kolbenstange im Kolben sind daher Sicherungsringe aus Stahl, Halteglieder in Form von Gummiringen und beispielsweise durch Verstemmen gebildete Hinterschneidungen im Kolben gegenüber der Kolbenstange bekannt geworden, durch welche das Hausziehen der Kolbenstange verhindert werden soll. Nachteilig bei den bekannten Lösungen ist es, daß die bekannten Sicherungen vielfach nicht genügen, um das Herausfahren der Kolbenstange beim plötzlichen Loslassen des Betätigungspedals zu verhindern. Die bekannt gewordenen Lösungen sind weiterhin oft auch schwer montierbar, indem sie zusätzliche Arbeitsgänge beim Einbau der Kolbenstange in den Kolben erfordern. Die bekannten Lösungen sind vielfach auch in ihrer sichernden Wirkung von der jeweiligen Winkellage der Kolbenstange gegenüber der Längsachse des Kolbens abhängig.

Aus der GB-A-2,235,961 ist eine Kolbenheinheit, für hydraulische Zylinder von Kraftfahrzeugen bekannt, bei der eine Kolbenstange in einer im Kolben ausgebildeten Ausnehmung mittels eines an der Kolbenstange befestigten elastischen Haltegliedes schwenkbar befestigt ist, das mit an im Kolben ausgebildeten Hinterschneidungen zusammenwirkt und die Kolbenstange an einem Herausgleiten aus dem Kolben hindert, wobei das Halteglied Rastnasen aufweist, welche sich an den Hinterschneidungen im Kolben abstützen. Hierbei ist als nachteilig anzusehen, daß durch die abgerundete Lagerung der Kolbenstange am Boden beim Verkippen der Kolbenstange aus der Zylinderachse die zum Zurückziehen des Kolbens am Halteglied angreifende Fläche der Kolbenstange verkippt und damit aus der idealen Form gebracht wird. Dies führt zur Verformung des Halteelements und kann somit zu Materialermüdungen führen, die sich negativ auf die Funktionssicherheit auswirken können.

Die vorliegende Erfindung hat zur Aufgabe, eine preiswerte einrastbare und unabhängig von der Winkellage der Kolbenstange zuverlässig wirkende Sicherung auch gegen höhere Auszugskräfte zu schaffen.

Die Aufgabe wird bei einem Kolben der sich aus dem Oberbegriff des Patentanspruchs 1 ergebenden Gattung durch die in dem kennzeichnenden Teil des Anspruchs aufgeführten Merkmale gelöst. Die Erfindung besteht im Prinzip also darin, ein auf die Kolbenstange aufsetzbares Halteglied vorzusehen, welches Rastnasen besitzt, die beim Einführen der Kolbenstange in den Kolben hinter entsprechende Hinterschneidungen im Innenraum des Kolbens greifen. Gleichzeitig wird man das Halteglied derart ausbilden, daß in diesem eingerasteten Zustand die Rastnasen weitgehend zusammengedrückt bleiben, so daß die Vorsprünge in der Kolbenstangenöffnung des Halteglieds mit radial nach innen verschobener Lage gehalten werden und damit einen entsprechenden Ansatz an der Kolbenstange dauerhaft halten. Man erhält somit eine doppelte Funktion der Rastnasen des Haltegliedes, indem diese zum einen eine Herausbewegung des Halteglieds selbst mit der Kolbenstange in axialer Richtung verhindern, während gleichzeitig durch radiales Anlegen der Rastnasen an die Kolbeninnenwand die sichernden Vorsprünge des Haltegliedes dauerhaft im Eingriff mit dem entsprechenden Ansatz an der Kolbenstange gehalten werden.

Das Halteglied wird man vorzugsweise aus Kunststoff ausführen, da hier auch komplizierte Formen sich preiswert herstellen lassen und derartige Kunststoffe weiterhin die notwendige Elastizität für die Haltenasen sowie die sich gegeneinander bewegenden Vorsprünge besitzen. Beim Einbau muß dementsprechend zuerst das rastende Halteglied über das Ende der Druckstange bzw. Kolbenstange geschoben werden, wobei die Vorsprünge durch den hindurchtretenden Ansatz der Kolbenstange kurzzeitig in Öffnungsrichtung verschwenkt werden. Anschließend kehren die Vorsprünge aufgrund der Elastizität der Rastnasen radial nach innen in ihre Ausgangslage zurück. Durch das nachfolgende Einschieben des Haltgliedes, einschließlich des in diesem Glied sitzenden Endes der Druckstange in dem Kolben, werden die Rastnasen beim Passieren der Sackbohrung in der Kolbenöffnung weiter in radialer Richtung zusammengepreßt, woraufhin sie sich nach dem Passieren der Hinterschneidungen in ihre Ausgangslage nach außen so weit zurückbewegen, bis sie an der inneren Mantelfläche des Kolbens anliegen, der radial innerhalb der unbelasteten Schwenklage der Rastnasen liegt.

Für das Halteglied ergibt sich durch Anwendung der Merkmale nach Anspruch 2 eine besonders einfache rotationssymmetrische Form. Das geschlossene Ende des Halteglieds dient gleichzeitig zur Übertragung von Druckkräften auf den Kolben. Die Hohlkegelform des Endes am Halteglied läßt sich relativ leicht gießen. Dabei ist darauf zu achten, daß die die Rastnasen formenden Schlitze eine geeignete Länge aufweisen. Einerseits dürfen sie nicht so lang sein, daß sie aufgrund hinreichender Auszugskräfte ausknicken, so daß der Ansatz der Druckstange zwischen den Vorsprüngen des Halteglieds herausgezogen werden kann. Andererseits dürfen sie aber auch nicht zu kurz sein, da sie eine hinreichende Elastizität besitzen müssen, so daß sie beim Einführen des Haltegliedes in den Kolben und zuvor beim Einführen der Druckstange in das Halteglied nicht abbrechen.

Da die Kolbenstange gegenüber dem Kolben schwenkbar sein soll und in allen Schwenklagen gleich gut gegen Auszugskräfte sichern soll, empfiehlt sich in Weiterbildung der Erfindung die Anwendung der Maßnahmen nach Anspruch 3.

In Weiterbildung der Erfindung hat sich für die Ausgestaltung des Halteglieds im Kolben eine Form bewährt, wie sie in Anspruch 4 beschrieben ist. Der kleinere Durchmesser muß dabei derart weit sein, daß ein hinreichendes Aufbiegen der Rastnasen beim Einführen des kugelförmigen Endes der Druckstange ohne Abbrechen der Rastnasen möglich ist. Einen wesentlichen Einfluß hat hierbei auch, wie weiter oben schon erläutert, die Länge der verwendeten Schlitze, die Auswahl des Kunststoffmaterials und die Wandstärke an den einzelnen Bereichen des Haltegliedes.

Andererseits müssen die Vorsprünge im eingerasteten Zustand des Haltegliedes so weit radial nach innen reichen, daß sie den vorzugsweise kugelförmigen Kopf der Druckstange sicher gegen hohe Auszugkräfte zu halten vermögen. Hierbei ist für das Halteglied, wie weiter oben erwähnt, es allerdings hilfreich, daß die Rastnasen im eingebauten Zustand durch die Kolbenwände nach innen gepreßt und so den kugelförmigen ersten Hohlraum relativ eng um das kopfförmige Stangenende schließen, wobei die Wände die Bewegung der Rastnasen im Bereich der Vorsprünge stark begrenzen.

Durch die Abschrägung der Außenkontur der Rastnasen gemäß Anspruch 5 erhält man eine relativ große Auflagefläche der Rastnasen an der Mantelfläche der Kolbenbohrung im eingebauten Zustand des Haltegliedes, wodurch die Elastizität der Haltenasen im Haltezustand weiter herabgesetzt wird.

Durch die in Anspruch 6 beschriebenen Fasen wird die Außenkontur des Haltegliedes an dessen geschlossenem Ende der Kugelform des Innenraums etwa angenähert. Man erreicht so bei einfacher Ausgestaltung der Gußform eine größere Gleichmäßigkeit der Wandstärke.
Gleichzeitig wird verhindert, daß das Halteglied mit seiner vorderen umlaufenden Kante an eine umlaufende Stoßkante am Boden der Aufnahmebohrung des Kolbens stoßen könnte. Hierdurch erhält man eine größere Lagegenauigkeit des Haltegliedes innerhalb des Kolbens.

Die vorliegende Erfindung macht es insbesondere möglich, auf einen Anschlag hinsichtlich der Rückholbewegung eines Betätigungspedals zu verzichten, da diese Anschlagwirkung durch das Haltelgied mit übernommen werden kann.

Nach Anspruch 9 ist vorgesehen, eine erfindungsgemäße Kolbeneinheit mit einem Kraftverstärker zu versehen. Dabei kann es sich beispielweise um einen Bremskraftverstärker handeln, der an einen Hauptzylinder gekoppelt ist. Man kann dann auf eine den Kolben zurückziehende Feder im Hauptzylinder verzichten und somit dessen Baulänge um die Blocklänge der eingesparten Feder verkürzen. Die Funktion der Feder kann dabei durch eine außerhalb des Hauptzylinders angebrachte Feder, insbesondere eine Feder des Bremskraftverstärkers, übernommen werden. Bei Verwendung eines Tandemhauptzylinders kann auf eine den Schwimmkolben betätigende erste Feder ganz verzichtet werden, während eine zwischen Schwimmkolben und Druckstangenkolben angebrachte zweite Feder mit um die Federkraft der ersten Feder verringerter Federkraft ausgelegt werden kann, was zusätzlich Baulänge einspart.

Dabei muß der Schwimmkolben mit einer mittels eines Fesselelements mit dem Druckstangenkolben in Verbindung stehenden Anschlaghülse kraftschlüssig verbunden sein, um das Zurückziehen des Schwimmkolbens zu gewährleisten.

Da es wünschenswert ist, den Bremskraftverstärker vom Hauptzylinder lösen zu können, ist nach den Ansprüchen 9 und 12 vorgesehen, das Haltegelied so im Kolben zu befestigen, daß eine Demontierbarkeit gewährleistet ist. Dabei sollte sich das Halteglied bei axialen Kräften, die im Betrieb einer Bremsanlage nie überschritten werden (im allgemeinen maximal 200 N bis 500 N), im Kolben halten, während es sich bei wesentlich höheren Käften ohne Beschädigung, z.B. durch Ausklinken, aus dem Kolben herauslösen lassen sollte.

Besonders vorteilhaft kann diese Funktion mit den in Anspruch 10 angegebenen Maßnahmen realisiert werden. Der Winkel ALPHA kann dabei an die geforderten maximal zu haltenden Kräften angepaßt werden sowie an das Verhalten des Halteglieds, welches von dessen Materialeigenschaften abhängt. Die glatte Anlage des Halteglieds an der Anlagefläche des Kolbens ermöglicht optimalen Kraftschluß.

Zwei Ausführungsbeispiele werden nachfolgend anhand der Zeichnungen erläutert. Darin zeigen:
- Fig. 1: einen Ausschnitt aus einem Geberzylinder oder einem anderen hydraulischen Zylinder, wie beispielsweise Hauptzylinder, Tandemhauptzylinder und ähnliches,
- Fig. 2: in Seitenansicht und vergrößerter Darstellung ein erfindungsgemäßes Halteglied,
- Fig. 3: in geschnittener Darstellung ein Halteglied nach Fig. 2,
- Fig. 4: in Draufsicht das Halteglied nach Fig. 2 und
- Fig. 5: in nochmals vergrößerter Darstellung einen in geschwenkter Lage in das Halteglied eingebauten Kolbenstange, wobei Kolbenstange und umgebender Kolben nur auszugsweise gezeigt sind.
- Fig. 6: einen erfindungsgemäß an einen Tandemhauptzylinder gekoppelten Bremskraftverstärker,
- Fig. 7: Halteglied und Rastnut in lösbarer Ausführung, vergrößerter Ausschnitt wie in Fig. 5.

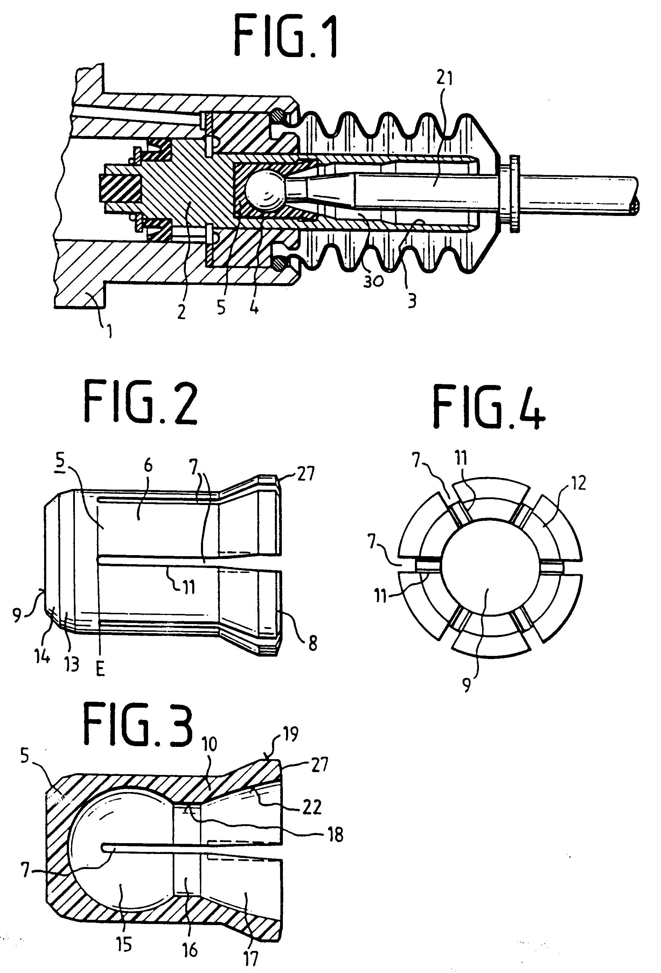

In Fig. 1 werden nur die Teile beschrieben, soweit sie für die Erfindung wesentlich sind. Die bei Geberzylindern oder Hauptzylinder üblichen Bauteile, wie Dichtmanschetten und Schutzmanschetten, Sicherungsringe usw. werden hier nicht näher erläutert.

Fig. 1 zeigt einen Zylinder 1, in dem ein Kolben 2 gedichtet geführt ist. Der Kolben 2 besitzt eine gestufte Sackbohrung 3, in deren Bodenabschnitt 4 das Halteglied 5 eingefügt ist. Wie aus Fig. 2 ersichtlich, besteht das Halteglied im wesentlichen aus einem zylindrischen Abschnitt 6 und einem konischen Abschnitt 12, wobei der Abschnitt 12 im wesentlichen die Form eines stumpfen Kegels aufweist. Fig. 3 zeigt, daß das Halteglied 5 ein Hohlkörper ist, wobei sich Schlitze 7 in Längsrichtung des Haltegliedes 5 erstrecken. Diese Schlitze 7 verlaufen vom offenen Ende 8 des Haltegliedes in Richtung zu dessen geschlossenen Ende bis zu einer gedachten Ebene E. Durch die Länge der Schlitze 7 ist weitgehend die Elastizität der durch die Schlitze 7 gebildeten Rastnasen 10 bestimmt. Die Seitenflächen 11 der Rastnasen 10 sind durch die radial verlaufenden Flächen der Schlitze 7 bestimmt.

Am geschlossenen Boden 9 des Haltegliedes 5 liegen hintereinander eine erste Fase 13 und eine zweite Fase 14, die mittels einer einfachen Formgebung einen vergleichsweise großen Radius annähern, so daß die vordere Stirnfläche des Bodens 9 sicher an dem Boden des Bodenabschnitts 4 der Sackbohrung 3 anliegen kann.

Fig. 3 zeigt den Innenraum des Haltegliedes, der einen ersten Hohlraum 15 aufweist, der im wesentlichen die Form eines Kugelabschnitts besitzt. Der erste Hohlraum 15 geht über in eine zylindrische Ausnehmung 16. Hieran schließt sich ein zweiter Hohlraum 17 an, der im wesentlichen die Form eines Kegelstumpfes hat. Die Mantelfläche der zylindrischen Ausnehmung 16 bilden radial nach innen ragende Vorsprünge 18 der Rastnasen 10.

Fig. 3 zeigt noch ringsegmentförmige Abschnitte 19 der äußeren Kontur der Rastnasen 10, die eine vergrößerte Anlagefläche der Rastnasen 10 an der Sackbohrung 3 bedingen.

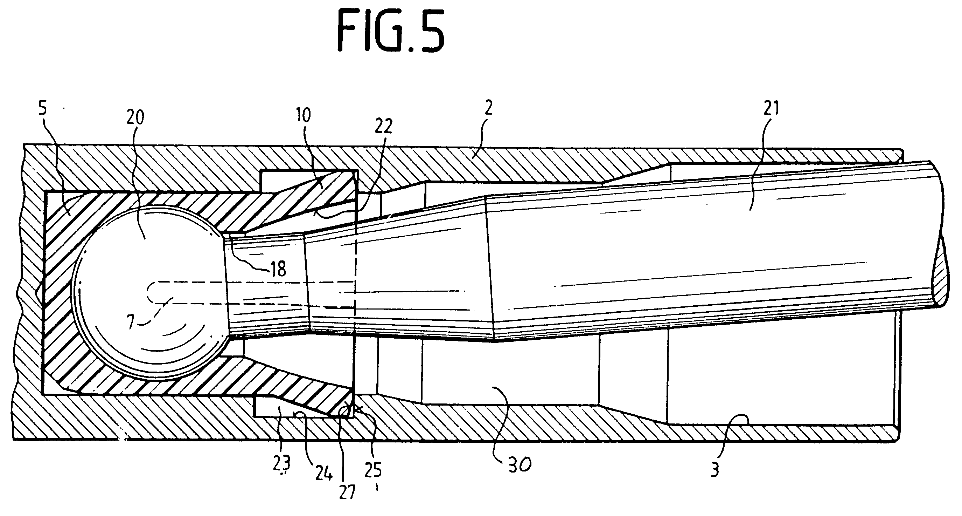

Von der Funktion her umfaßt der erste Hohlraum 15 einen entsprechend ausgeformten im wesentlichen kugelförmigen Ansatz 20 (siehe Fig. 5) der Kolbenstange 21. Dabei verhindern die Vorsprünge 18, daß die Kolbenstange 21 aus dem Halteglied 5 herausgleiten kann. Die konischen Innenwände 22 der Rastnasen 10 lassen weiterhin eine Schwenkbewegung der Kolbenstange 21 zu.

Wie aus Fig. 5 ersichtlich, ist die gestufte Sackbohrung 3 in ihrem vorderen geschlossenen Bereich mit einer umlaufenden Radialnut 23 versehen, wobei sich die Rastnasen 10 an der umlaufenden Nutmantelfläche 24 in radialer Richtung abstützen, während die zum Boden der Sackbohrung 3 weisende Hinterschneidung 25 für eine Abstützung der Rastnasen 10 in axialer Richtung sorgt.

Zum Zusammenbau wird zuerst der kugelförmige Ansatz 20 der Kolbenstange 21 in den ersten Hohlraum 15 des Haltegliedes 5 geschoben. Dabei werden die Rastnasen 10 beim Durchtritt der Kontur des kugelförmigen Ansatzes 20 durch die Vorsprünge 18 aufgrund der Wirkung der Schlitze 7 radial nach außen gebogen. Nachdem der kugelförmige Ansatz 20 von dem ersten Hohlraum 15 aufgenommen wurde, kehren die Vorsprünge 18 und damit die Rastnasen 10 weitgehend in ihre ursprüngliche Lage zurück. Anschließend wird die Einheit aus Kolbenstange 21 und Halteglied 5 in die gestufte Sackbohrung 3 solange eingeschoben, bis das offene Ende 8 des Haltegliedes 5 die Hinterschneidungen 25 der Radialnut 23 passiert hat, so daß die Rastnasen 10 sich radial nach außen bewegen können. Auf diese Weise ist dann das Halteglied 5 samt der Kolbenstange 21 in der Sackbohrung 3 gefangen. Die radiale Anlage der Rastnasen 10 an der Nutmantelfläche 24 sorgt weiterhin für eine Versteifung der Elastizität der Rastnasen 10 in Höhe der Vorsprünge 18, so daß diese Vorsprünge 18 erhebliche Zugkräfte der Kolbenstange 21 aufzunehmen vermögen.

Sehr vorteilhaft für die Wirkungsweise des Haltegliedes 5 ist auch die Ausgestaltung der rückwärtigen Anlagefläche 27, die in radialer Richtung zur Mittelachse abgeschrägt, insbesondere abgerundet ist. Dabei kann der Abrundungsradius beispielsweise der Abstand vom Kugelmittelpunkt des kugelförmigen ersten Hohlraums bis zur Anlagefläche 27 sein. Aber auch andere, insbesondere kleinere Radien, können sich empfehlen. Der wesentliche Vorteil liegt bei der Abrundung oder Abschrägung darin, daß bei der Bewegung der Rastnasen 10 radial nach außen die auf die Hinterschneidung 25 auflaufende abgerundete, abgeschrägte Anlagefläche 27 für eine in Richtung zum Boden 9 hin gerichtete Kraft am Halteglied 5 sorgt, welche für eine feste Anlage zwischen dem Boden 9 gemäß Fig. 2 und der entsprechenden Anlagefläche des Kolbens 2 (Fig. 1) sorgt. Hierdurch lassen sich in einfacher Weise Toleranzen ausgleichen, indem sich die Rastnasen 10 so weit radial nach außen bewegen, bis das Halteglied 5 fest gegenüber dem Kolben 2 in axialer Richtung eingespannt und verrastet ist.

Für die Wirkungsweise des Haltegliedes 5 ist auch die Anzahl der Rastnasen 10 wichtig, wobei die Elastizität mit der Zahl der gewählten Rastnasen 10 zunimmt. Dabei hat sich die Wahl von sechs Schlitzen 7 zur Bildung der Rastnasen 10 und der daraus resultierenden Anzahl von Rastnasen 10 in der Praxis bewährt, da hier das Halteglied 5 auf der einen Seite elastisch genug ist, auf der anderen Seite aber auch zum Verhindern eines Herausziehens die notwendige Steifigkeit behält.

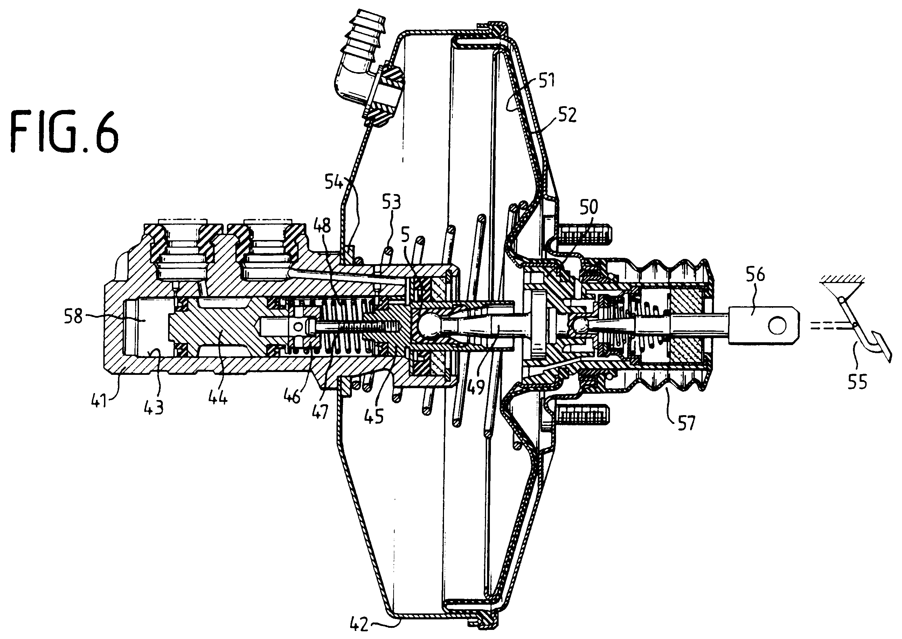

Fig. 6 zeigt einen Tandemhauptzyinder 41, an den ein Unterdruckbremskraftverstärker 42 gekoppelt ist. Auf die Einzelteile von Tandemhauptzylinder 41 und Unterdruckbremskraftverstärker 42 und deren Funktion wird nur insoweit eingegangen, als es für die Erfindung bedeutsam ist.

In einer Bohrung 43 des Tandemhauptzylinders 41 werden ein Schwimmkolben 44 und ein Druckstangenkolben 45 geführt. Am Schwimmkolben 44 ist eine Anschlaghülse 46 kraftschlüssig befestigt, in der sich ein mit dem Druckstangenkolben 45 kraftschlüssig verbundenes Fesselelement 47 axial zwischen zwei Extremstellungen bewegen kann. Zwischen Schwimmkolben 44 und Druckstangenkolben 45 ist eine Feder 48 angebracht, die unter Vorspannung steht, und die Kolben 44,45 auseinander drückt.

Der Druckstangenkolben 45 ist über das Halteglied 5 mit dem Ausgangsglied 49 des Unterdruckbremskraftverstärkers 42 verbunden, welches wiederum spielfrei am Ventilkolben 50 des Unterdruckbremskraftverstärkers 42 befestigt ist. Am Ventilkolben 50 sind der Arbeitskolben 51 und die Membran 52 befestigt. Die Kolbenrückholfeder 53 des Unterdruckbremskraftverstärkers 42 stützt sich über die Befestigung 54 des Tademhauptzylinders 41 an diesem ab, und ist andererseits am Arbeitskolben 51 befestigt. Wird eine an einem Betätigungspedal 55 eingeleitete Kraft über ein Übertragungsglied 56 auf den Ventilkolben 50 übertragen, bewirkt die Ventileinrichtung 57 des Unterdruckbremskraftverstärkers 42 in bekannter Weise, daß sich auf der im Bild rechten Seite des Arbeitskolbens 51 ein höherer Druck aufbaut als auf dessen linker Seite besteht, so daß sich der Arbeitskolben 51 und mit ihm Ausgangsglied 49 und Druckstangenkolben 45 nach links bewegen.

Der Vorgang des Bremsdruckaufbaus im Tandemhauptzylinder 41 erfolgt in bekannter Weise.

Wird das Betätigungspedal 55 losgelassen, wird der Arbeitskolben 51 des Unterdruckbremskraftverstärkers 42 in bekannter Weise wieder nach rechts bewegt, wobei er das Ausgangsglied 49, das spielfrei an ihn gekoppelt ist, mitzieht. Der über das Halteglied 5 an das Ausgangsglied 49 gekoppelte Druckstangenkolben 45 wird ebenfalls nach rechts gezogen, wobei die überlicherweise auftretenden Kräfte von maximal 200N bis 500N unterhalb der Maximalkraft liegen, die vom Halteglied 5 sicher gehalten wird.

Das Zurückziehen des Schwimmkolbens 44 erfolgt im Zusammenwirken von Feder 48 und Fesselelement 47, wobei das Fesselelement 47 dafür sorgt, daß sich bei unbetätigtem Betätigungspedal 55 sowohl Druckstangenkolben 45 als auch Schwimmkolben 44 in ihrer äußerst rechten Position befinden. In herkömmlichen Tandemhauptzylindern wird dies durch die Feder 48 und eine zusätzliche, im linken Druckraum 58 angebrachte zweite Feder erreicht. Auf letztere Feder wird im Ausführungsbeispiel ganz verzichtet, ihre Funktion wird durch die Kolbenrückholfeder 53 des Unterdruckbremskraftverstärkers 42 mit übernommen. Die Feder 48 kann, da sie nur die Reibung des Schwimmkolbens 44 und nicht noch zusätzlich die Kraft der eingesparten zweiten Feder überwinden muß, schwächer ausgelegt werden. Dadurch kann die Baulänge des Tandemhauptzylinders 41 vermindert werden, und zwar um die Blocklänge der eingesparten Feder und die der eingesparten Federkraft entsprechende Blocklänge der Feder 48.

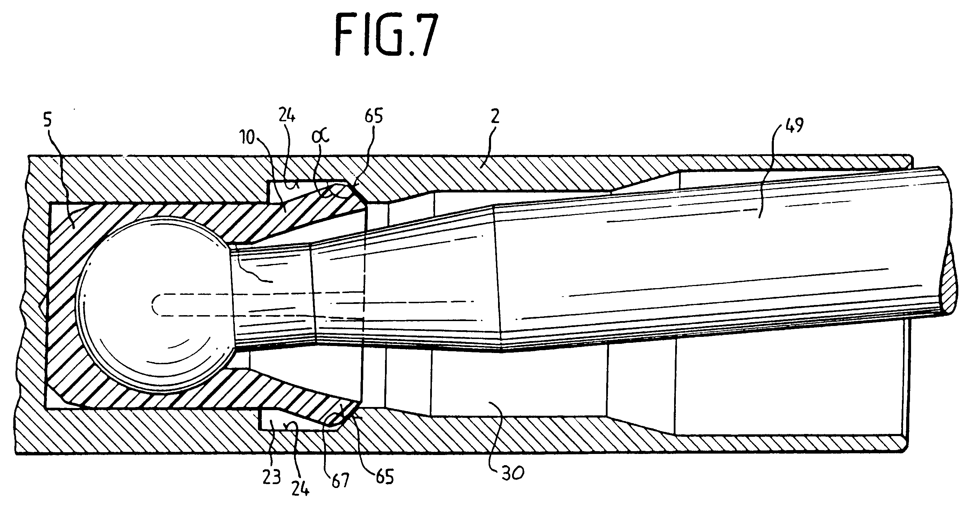

Fig. 7 zeigt den gleichen Ausschnitt wie Fig. 5, hier in einer für die Demontage geeigneten Ausführungsform, wie sie beispielsweise bei der Verbindung von Tandemhauptzylinder 41 und Unterdruckbremskraftverstärker 42 aus Fig. 6 eingesetzt wird.

Dabei ist die Radialnut 23 des Kolbens 2,45 mit einer angeschrägten Flanke 65 versehen, die somit einen kegelstumpfförmigen Bereich der Radialnut 23 bildet. Der bei einem axialen Schnitt von Nutmantelfläche 24 und Flanke 65 gebildete Winkel α ist ein stumpfer Winkel, er beträgt im Ausführungsbeispiel 135°.

Die rückwärtigen Anlageflächen 67 der Rastnasen 10 sind ebenfalls abgeschrägt, und zwar so, daß sie im eingebauten Zustand des Halteglieds 5 glatt an der Flanke 65 anliegen.

Es ist somit gewährleistet, daß das Halteglied 5 bei durch das Ausgangsglied 49 ausgeübten Zugkräften sicher hält, solange diese einen Maximalwert von F = 200N bis 500N nicht überschreiten, und andererseits zerstörungsfrei aus der Radialnut 23 gelöst werden kann, wenn wesentlich höhere Kräfte wirken, die zur Demontage von Tandemhauptzylinder 41 und Unterdruckbremskraftverstäker 42 voneinander aufgewandt werden.

### Bezugszeichenliste

- 1: Zylinder
- 2: Kolben
- 3: Sackbohrung
- 4: Bodenabschnitt
- 5: Halteglied
- 6: zylinderischer Abschnitt
- 7: Schlitze
- 8: offenes Ende
- 9: Boden
- 10: Rastnase
- 11: Seitenfläche
- 12: konischer Abschnitt
- 13: Fasen
- 14: Fasen
- 15: erster Hohlraum
- 16: zylindrische Ausnehmung
- 17: zweiter Hohlraum
- 18: Vorsprünge
- 19: ringsegmentförmiger Abschnitt
- 20: Ansatz
- 21: Kolbenstange
- 22: konische Innenwand
- 23: Radialnut
- 24: Nutmantelfläche
- 25: Hinterschneidung
- 26: Stirnfläche
- 27: Anlagefläche
- 30: Ausnehmung
- 41: Tandemhauptzylinder
- 42: Unterdruckbremskraftverstärker
- 43: Bohrung
- 44: Schwimmkolben
- 45: Druckstangenkolben
- 46: Anschlaghülse
- 47: Fesselelement
- 48: Feder
- 49: Ausgangsglied
- 50: Ventilkolben
- 51: Arbeitskolben
- 52: Membran
- 53: Kolbenrückholfeder
- 54: Befestigung
- 55: Betätigungspedal
- 56: Übertragungsglied
- 57: Ventileinrichtung
- 58: Druckraum
- 65: Flanke
- 67: Anlagefläche

## Patentansprüche

1. Kolbenheinheit (2,5), für hydraulische Zylinder (1,41) von Kraftfahrzeugen, bei der eine Kolbenstange (21,49) in einer im Kolben (2) ausgebildeten Ausnehmung (30) mittels eines an der Kolbenstange (21,49) befestigten elastischen Haltegliedes (5) schwenkbar befestigt ist, das mit an im Kolben (2) ausgebildeten Hinterschneidungen (25,65) zusammenwirkt und die Kolbenstange (21,49) an einem Herausgleiten aus dem Kolben (2) hindert, wobei das Halteglied (5) Rastnasen (10) aufweist, welche sich an den Hinterschneidungen (25,65) im Kolben (2) abstützen, dadurch **gekennzeichnet**, daß die Kolbenstange (21,49) einen kugelförmigen Ansatz (20) aufweist, der von einem ersten Hohlraum (15) des Halteglieds (5) umgriffen wird, welcher in eine zylindrische Ausnehmung (16) übergeht, an die sich ein zweiter Hohlraum (17) anschließt, und daß das Halteglied (5) sowohl im Bereich des ersten Hohlraums (15) als auch im Bereich der zylindrischen Ausnehmung (16) an der Innenfläche der im Kolben (2) ausgebildeten Ausnehmung (30) anliegt.

2. Kolbeneinheit nach Anspruch 1, dadurch **gekennzeichnet,** daß das Halteglied (5) einen mit geschlossenem Boden (9) versehenen zylindrischen Abschnitt (6) aufweist, der an seiner offenen Seite an einen konischen Abschnitt (12) übergeht, und daß Schlitze (7) vorhanden sind, die sich längs des konischen Abschnitts (12) bis in den zylindrischen Abschnitt (6) hinein erstrecken und die Rastnasen (10) bilden.

3. Kolbeneinheit nach einem der Ansprüche 1 oder 2, dadurch **gekennzeichnet**, daß die Rastnasen (10) gleichmäßig über den Umfang des Halteglieds (5) verteilt sind.

4. Kolbeneinheit nach einem der vorangegangenen Ansprüche, dadurch **gekennzeichnet,** daß der zweite Hohlraum (17) die Form eines Kegelstumpfes aufweist, dessen kleinerer Durchmesser dem Durchmesser der zylindrischen Ausnehmung (16) entspricht, und dessen größter Durchmesser in entspanntem Zustand mindestrens so groß ist, wie der Durchmesser des ersten Hohlraums (15).

5. Kolbeneinheit nach einem der vorangegangenen Ansprüche, dadurch **gekennzeichnet,** daß die Enden der Rastnasen (10) einen ringsegmentförmigen Abschnitt (19) aufweisen, dessen Außenfläche koaxial zur Achse des Zylinders (1) angeordnet ist.

6. Kolbeneinheit nach einem der vorangegangenen Ansprüche, dadurch **gekennzeichnet,** daß der zylindrische Abschnitt (6) an seiner Außenseite mit mehreren umlaufenden Fasen (13,14) mit unterschiedlicher, zum Boden (9) hin zunehmender Neigung versehen ist.

7. Kolbeneinheit nach einem der Ansprüche 1 bis 6, dadurch **gekennzeichnet,** daß die Rastnasen (10) an den Hinterschneidungen (25) angreifende Anlageflächen (27) aufweisen, die derart abgeschrägt oder abgerundet sind, daß bei einer auswärtsgerichteten Radialbewegung der Rastnasen (10) eine zum Boden (9) der Ausnehmung (30) weisende Kraft auf das Halteglied (5) wirkt.

8. Kolbeneinheit nach Anspruch 7, dadurch **gekennzeichnet,** daß die Anlageflächen (27) kreisbogenförmig abgerundet sind.

9. Kolbeneinheit nach einem der Ansprüche 1 bis 6, dadurch **gekennzeichnet,** daß dem hydraulischen Zylinder (1,41) ein Kraftverstärker (42) vorgeschaltet ist, dessen Ausgangskraft in die Kolbenstange (21,49) eingeleitet wird, wobei das Halteglied (5) demontierbar im Kolben (2,45) befestigt ist.

10. Kolbeneinheit nach Anspruch 9, dadurch **gekennzeichnet,** daß die Hinterschneidung (25) als eine umlaufende Radialnut (23) ausgebildet ist, derem dem Halteglied (5) abgewandte Flanke (65) schräg abgeflacht ist, und daß die Neigung der Flanke (65) der Neigung einer am Ende des Halteglieds (5) ausgebildeten Anlagefläche (67) entspricht.

11. Kolbeneinheit nach Anspruch 9 oder 10, dadurch **gekennzeichnet,** daß der Kraftverstärker (42) ein Unterdruckbremskraftverstärker ist, an dessen Arbeitskolben die Kolbenstange (21,49) spielfrei gekoppelt ist.

12. Kolbenheinheit nach einem der vorangegangen Ansprüche, dadurch **gekennzeichnet,** daß das Halteglied (5) aus Kunststoff besteht.

## Claims

1. A piston unit (2, 5) for hydraulic cylinders (1, 41) of automotive vehicles, in which a piston rod (21, 49) is swivellingly fixed within a recess (30) in the piston (2) by means of an elastic retaining member (5) which is attached to the piston rod (21, 49) and interacts with undercuts (25, 65) in the piston (2) and prevents the piston rod (21, 49) from sliding out of the piston (2), the retaining member (5) having latching noses (10) which are supported on the undercuts (25, 65) in the piston (2),
**characterized** in that the piston rod (21, 49) has a spherical attachment (20) which is encircled by a first cavity (15) of the retaining member (5) and passes over into a cylindrical recess (16) that is succeeded by a second cavity (17), and in that both in the range of the first cavity (15) and in the range of the cylindrical recess (16) the retaining member (5) abuts on the inside surface of the the recess (30) formed in the piston (2).

2. A piston unit as claimed in claim 1,
**characterized** in that the retaining member (5) is provided with a cylindrical section (6) having a closed bottom (9) and passing over into a conical section (12) at its open side, and in that slots (7) are provided which extend alongside the conical section (12) up into the cylindrical section (6) and form latching noses (10).

3. A piston unit as claimed in anyone of claims 1 or 2,
**characterized** in that the latching noses (10) are uniformly distributed over the circumference of the retaining member (5).

4. A piston unit as claimed in anyone of the preceding claims,
**characterized** in that the second cavity (17) has the shape of a truncated cone whose smaller diameter corresponds to the diameter of the cylindrical recess (16) and whose largest diameter, in the unstressed condition, is at least as large as the diameter of the first cavity (15).

5. A piston unit as claimed in anyone of the preceding claims,
**characterized** in that the ends of the latching noses (10) are formed with an annular segment-shaped section (19) whose periphery is disposed coaxially with the axis of the cylinder (1).

6. A piston unit as claimed in anyone of the preceding claims,
**characterized** in that the cylindrical section (6) is provided at its outside with a plurality of circumferential bevels (13, 14) having a different inclination which increases toward the bottom (9).

7. A piston unit as claimed in anyone of claims 1 to 6,
**characterized** in that the latching noses (10) are formed with abutment surfaces (27) which make catch at the undercuts (25) and are bevelled or rounded off in such a manner that, in the event of an outwardly directed radial movement of the latching noses (10), a force directed toward the bottom (9) of the recess (30) acts on the retaining member (5).

8. A piston unit as claimed in claim 7,
**characterized** in that the abutment surfaces (27) are rounded off so as to be circular arc-shaped.

9. A piston unit as claimed in anyone of claims 1 to 6,
**characterized** in that the hydraulic cylinder (1, 41) is preceded by a power booster (42) whose output force is introduced into the piston rod (21, 49) which is rigidly coupled to the power booster (42), the-retaining member (5) being fixed within the piston (2, 45) so as to allow it to be disassembled.

10. A piston unit as claimed in claim 9,
**characterized** in that the undercut (25) is configured in the shape of a circumferential radial groove (23) whose flank (65) facing away from the retaining member (5) is obliquely flattened, and in that the inclination of the flank (65) corresponds to the inclination of an abutment surface (67) which is configured at the end of the retaining member (5).

11. A piston unit as claimed in claim 9 or 10,
**characterized** in that the power booster (42) is a vacuum brake power booster, to the working piston of which the piston rod (21, 49) is coupled without play.

12. A piston unit as claimed in anyone of the preceding claims,
**characterized** in that the retaining member (5) is made of plastic material.

## Revendications

1. Unité de piston (2, 5), pour cylindre hydraulique (1, 41) de véhicule automobile, dans laquelle une tige de piston (21, 49) est fixée d'une manière pivotante dans un logement (30), ménagé dans le piston (2), au moyen d'une pièce de maintien (5) élastique qui est fixée à la tige de piston (21, 49) et coopère avec des parties en contre-dépouille (25, 65) ménagées dans le piston (2) et qui empêche la tige de piston (21, 49) de sortir du piston (2) en glissant, la pièce de maintien (5) comportant des talons d'enclenchement (10) qui prennent appui sur les parties en contre-dépouille (25, 65) du piston (2), caractérisée en ce que la tige de piston (21, 49) comporte une partie d'embout (20) de forme sphérique qui est enveloppée par une première cavité (15) de la pièce de maintien (5) qui se raccorde à un évidement cylindrique (16) auquel une seconde cavité (17) se raccorde et en ce que la pièce de maintien (5) prend appui sur la surface intérieure du logement (30), réalisé dans le piston (2), aussi bien dans la zone de la première cavité (15) que dans la zone de l'évidement cylindrique (16).

2. Unité de piston selon la revendication 1, caractérisée en ce que la pièce de maintien (5) comprend une section cylindrique (6) qui comporte un fond fermé (9) et qui, de son côté ouvert, se raccorde à une section conique (12) et en ce qu'il est prévu des fentes (7) qui s'étendent le long de la section conique (12) jusque dans la section cylindrique (6) et forment les talons d'enclenchement (10).

3. Unité de piston selon l'une des revendications 1 et 2, caractérisée en ce que les talons d'enclenchement (10) sont uniformément répartis à la périphérie de la pièce de maintien (5).

4. Unité de piston selon l'une des revendications précédentes, caractérisée en ce que la seconde cavité (17) a la forme d'un tronc de cône dont le plus petit diamètre est égal au diamètre de l'évidement cylindrique (16) et dont le plus grand diamètre est, à l'état sans contrainte, au moins aussi grand que le diamètre de la première cavité (15).

5. Unité de piston selon l'une des revendications précédentes, caractérisée en ce que les extrémités des talons d'enclenchement (10) comportent une section (19) en forme de segments d'anneau dont la surface extérieure est disposée suivant le même axe que le cylindre (1).

6. Unité de piston selon l'une des revendications précédentes, caractérisée en ce que, sur sa face extérieure, la section cylindrique (6) comporte plusieurs chanfreins (13, 14) qui en font le tour et présentent des inclinaisons différentes qui vont en croissant vers le fond (9).

7. Unité de piston selon l'une des revendications 1 à 6, caractérisée en ce que les talons d'enclenchement (10) comportent des surfaces d'appui (27) qui agissent sur les parties en contre-dépouille (25) et qui ont une forme de bord abattu ou une forme arrondie telle que, lors d'un déplacement radial des talons d'enclenchement (10) qui est dirigé vers l'extérieur, une force orientée vers le fond (9) du logement (30) s'exerce sur la pièce de maintien (5).

8. Unité de piston selon la revendication 7, caractérisée en ce que les surfaces d'appui (27) ont une forme arrondie en arc de cercle.

9. Unité de piston selon l'une des revendications 1 à 6, caractérisée en ce qu'il est prévu, disposé en amont du cylindre hydraulique (1, 41), un amplificateur de force (42) dont la force de sortie est appliquée à la tige de piston (21, 49), la pièce de maintien (5) étant fixée dans le piston (2, 45) de façon à pouvoir être démontée.

10. Unité de piston selon la revendication 9, caractérisée en ce que la partie en contre-dépouille (25) est réalisée sous forme d'une gorge radiale (23) qui fait le tour et dont un flanc (65) qui fait face à la pièce de maintien (5) présente une forme adoucie inclinée et en ce que l'inclinaison du flanc (65) est égale à l'inclinaison d'une surface d'appui (67) réalisée à l'extrémité de la pièce de maintien (5).

11. Unité de piston selon la revendication 9 ou 10, caractérisée en ce que l'amplificateur de force (42) est un amplificateur de force de freinage à dépression au piston de travail duquel la tige de piston (21, 49) est accouplée sans jeu.

12. Unité de piston selon l'une des revendications précédentes, caractérisée en ce que la pièce de maintien (5) est en matière plastique.
